# DEMANDE DE BREVET EUROPEEN

(11) **EP 4 497 560 A1**
(43) Date de publication de la demande: **29.01.2025**
(21) Numéro de dépôt: 24189399.9
(22) Date de dépôt: 18.07.2024
(51) Int. Cl.: B27K 3/02, B27K 3/15

(54) **AMÉLIORATION DE LA TENUE AU FEU DE MATÉRIAUX À BASE DE FIBRES DE BOIS**

(30) Priorité: 27.07.2023 FR 2308129
(71) Demandeur: Nexans, 92400 Courbevoie (FR)
(72) Inventeur: GYPPAZ, Franck, 69003 LYON (FR)
(74) Mandataire: Ipsilon

(57) **Abrégé**

L'invention concerne un procédé d'ignifugation d'un substrat à base de fibres de bois comprenant l'application sur ledit substrat d'une composition géopolymère. Elle concerne également les éléments ignifugés tels qu'obtenus selon ce procédé, qui comprennent au moins un substrat à base de fibres de bois, et au moins un revêtement à base d'un matériau géopolymère sur ledit substrat et leurs utilisation notamment dans le domaine du bâtiment, par exemple à titre d'éléments architecturaux, structuraux ou décoratifs intérieurs, ou pour la réalisation de chemin de câbles ignifugés.

## Description

### Domaine technique

La présente invention a trait au domaine de l'ignifugation du bois. Elle s'intéresse plus spécifiquement à la protection vis-à-vis du feu de substrats à base de fibres de bois, comme ceux employés par exemple dans le domaine du bâtiment, notamment les éléments de construction et de décoration intérieures des immeubles d'habitation ou des locaux destinés à recevoir du public.

Au sens de la présente description, on entend par substrat « à base de fibre de bois » (ou également substrat «ligneux ») une pièce solide comprenant ou constituée par des fibres de bois. Cette pièce solide peut être une pièce en bois ou bien une pièce à base de fibres ou de particules de bois agglomérées. Ainsi, selon un mode de réalisation possible, un substrat à base de fibre de bois peut être un substrat de bois massif (une planche par exemple ou plus généralement un bloc de bois massif usiné) ou bien un contreplaqué ou un lamellé collé comprenant plusieurs plaques de bois encollées. Selon un autre mode possible, un substrat à base de fibres de bois peut comprendre des particules de bois (copeaux, sciure et/ou farine de bois) réagglomérées entre elles, et le plus souvent solidarisées à l'aide d'un liant, comme par exemple un matériau de type panneau de particules (notamment OSB ou MDF) à base de particules de bois (copeaux de bois coupés et broyés en général) puis agglomérés avec un liant (typiquement une résine par exemple une résine isocyanate), ou bien un matériau de type panneaux de fibres obtenus à partir de fibres de bois compressées avec ou sans liant.

Les propriétés dites « d'ignifugation » et de « protection vis-à-vis du feu » recherchées dans le cadre de la présente invention sont des propriétés de résistance au feu du substrat, qui l'empêchent de brûler dans les conditions d'un incendie, en permettant ainsi notamment d'inhiber la propagation du feu.

### Arrière-plan technologique

Des méthodes destinées à assurer une ignifugation de bois ou de fibres de bois ont été décrites par le passé, qui s'avèrent cependant assez lourdes à mettre en oeuvre en règle générale. On peut par exemple citer le procédé décrit dans FR 2 358 964, où un matériau ligneux est immergé un matériau ligneux dans une solution aqueuse d'un sel de type chlorure de sodium, de préférence maintenue en ébullition ; puis séché jusqu'à un taux d'humidité d'environ 12% ; puis imprégné de silicate et enrobé de kaolin, le matériau ligneux enrobé étant ensuite mis sous pression et à une température de 100 à 1400° C pendant un temps d'environ 1 minute ; séché jusqu'à siccité complète puis cuit pendant quelques secondes à environ 5000°C.

D'autres méthodes mettent en oeuvre des composés toxiques ou dangereux comme des composés organiques volatils, ou bien encore le borax préconisé par exemple dans la demande CZ35748.

Un but de la présente invention est de conférer des propriétés de résistance au feu à un substrat à base de fibres de bois en évitant les difficultés rencontrées avec les méthodes décrites dans les documents précités, en particulier en fournissant un procédé d'ignifugation aisé à mettre en oeuvre et sans avoir à employer de composés toxiques ou délicats à manipuler. Dans ce cadre, l'invention vise de préférence à fournir un effet d'ignifugation du type défini ci-dessus, en limitant en outre, autant que possible, la génération de fumées.

### Résumé de l'invention

Pour atteindre ces objectifs, la présente invention propose de revêtir le substrat à base de fibres de bois avec une composition de géopolymère. La composition s'applique sur le substrat avec la même facilité qu'une composition de peinture aqueuse et le substrat revêtu s'avère présenter des propriétés de résistance au feu particulièrement intéressantes.

Plus précisément, selon un premier aspect, la présente invention a pour objet un procédé d'ignifugation d'un substrat à base de fibres de bois comprenant l'application sur ledit substrat d'une composition géopolymère.

L'application de la composition géopolymère sur le substrat peut être totale ou partielle. Plus précisément, cette application est avantageusement être effectuée sur la totalité de la surface disponible du substrat, mais il peut également être choisi, par exemple pour des raisons économiques, d'appliquer la composition géopolymère uniquement au niveau de surfaces susceptibles d'être soumises au feu dans les conditions d'un incendie. Dans le cas d'une application sur une partie seulement de la totalité de la surface disponible du substrat, il est préférable que la portion de la surface revêtue par la composition géopolymère comprenne la totalité des zones de surface susceptibles d'être soumise au feu en cas d'incendie.

La composition géopolymère employée selon l'invention est une composition aqueuse qui présente l'avantage de pouvoir être appliquée sur le substrat de façon similaire à une composition de peinture, en modifiant au besoin la viscosité de la composition en jouant par exemple sur sa teneur en eau (la viscosité diminue lorsque la teneur en eau augmente).

L'application de la composition géopolymère en surface peut avantageusement s'accompagner de phénomènes plus ou moins marqués d'imprégnation du substrat par la composition géopolymère. Selon un mode de réalisation particulier une partie de la composition géopolymère peut être employée pour assurer un rôle de liant au sein du substrat, en particulier lorsque le substrat est à base de fibres de bois réagglomérées ou de particules à base de fibres de bois réagglomérées.

Selon un autre aspect particulier, la présente invention a pour objet les éléments ignifugés à base de fibres de bois du type obtenus en employant le procédé de l'invention. Ces éléments ignifugés comprennent au moins un substrat à base de fibres de bois, de préférence du type précité, et au moins un revêtement à base d'un matériau géopolymère sur ledit substrat.

Au sens où il est employé dans la présente description, le terme de « matériau géopolymère » désigne un solide obtenu par durcissement d'une composition géopolymère. Le procédé de l'invention comprend en général, suite à l'application de la composition géopolymère, une étape de conversion de la composition géopolymère (initialement liquide) en un matériau géopolymère (formant un dépôt solide notamment en surface, et généralement plus ou moins en profondeur), notamment par séchage.

Dans le cadre des travaux qui ont conduit à la présente invention, les inventeurs ont maintenant montré que les éléments ignifugés tels qu'obtenus selon l'invention présente des propriétés très intéressantes de résistance au feu, ce qui les rend par exemple particulièrement bien adaptés à titre d'éléments architecturaux, structuraux ou décoratifs, notamment à l'intérieur des logements d'habitation ou plus généralement à l'intérieur d'immeubles destinés à recevoir du public. A titre illustratif et non limitatif, une élément ignifugé selon l'invention peut par exemple être tout élément de structure comme une poutre, une lambourde, une porte, un encadrement de porte ou de fenêtre, tout ou partie d'une cloison, tout ou partie d'un élément de mobilier (armoire, étagère, plan de travail...), tout ou partie d'un élément de décoration. Ces applications particulières des éléments ignifugés précités constituent, selon encore un autre aspect, un autre objet de la présente invention.

Outre les avantages qu'ils présentent en eux termes de résistance au feu propres, les éléments revêtus obtenus selon l'invention assurent par ailleurs un effet de barrière thermique de nature à isoler thermiquement deux espaces en les plaçant à leur interface : un élément revêtu selon l'invention s'avère ainsi capable d'inhiber une propagation d'énergie thermique et peut par exemple protéger des éléments thermiquement sensibles en s'interposant entre eux et une source de chaleur. Selon un mode de réalisation particulier, un élément revêtu selon l'invention peut être un chemin de câbles, destiné à contenir des câbles électriques pour le transport d'énergie ou d'information. Dans ce cas, le substrat se présente typiquement sous la forme d'une pièce dotée d'au moins une gorge pour le passage d'un câble ou de plusieurs câbles sur une de ses faces, la face opposée, plus ou moins décorative, permettant de masquer les fils. L'application d'une composition géopolymère selon l'invention sur l'une et/ou l'autre des faces d'un chemin de câbles de ce type induit une protection des câbles en cas d'incendie par effet de barrière thermique ou bien, à l'inverse, cantonne un début d'incendie qui trouverait son origine dans le câble (sous l'effet d'une surtension ou d'arcs électriques par exemple).

Les inventeurs ont également mis en évidence qu'en plus des avantages précités, le géopolymère appliqué selon l'invention permet une amélioration de la résistance mécanique du substrat : la composition géopolymère appliquée tend en effet à pénétrer la structure du substrat (tout particulièrement dans le cas d'un substrat poreux de type panneau de particules par exemple) et le géopolymère est donc formé non seulement en surface (où il joue le rôle précité de protection vis-à-vis du feu) mais également au sein de la structure du substrat, où il assure un rôle de liant mécanique qui améliore les propriétés mécaniques du substrat.

En outre, la composition géopolymère appliquée sur le substrat s'avère présenter des propriétés fongicides et bactéricides, et induire une résistance aux insectes. Ainsi, en plus d'une amélioration des propriétés mécaniques, le revêtement appliqué selon l'invention induit une inhibition de la dégradation du substrat par des organismes vivants, notamment en inhibant la formation de moisissures ou de champignons ou les attaques par les termites ou d'autres xylophages.

Par ailleurs, la couche de géopolymère appliquée sur le substrat peut être avantageusement employée comme couche d'accroche pour le dépôt d'une deuxième couche de revêtement à partir d'une composition aqueuse. En particulier, la couche de géopolymère appliquée peut au besoin servir de couche d'accroche à une seconde couche de géopolymère si on souhaite augmenter l'épaisseur de la couche obtenue et donc augmenter les effets précités. La couche de géopolymère peut également servir de couche d'apprêt avant l'application d'une peinture aqueuse, ou bien encore d'un vernis ou d'un adhésif à base aqueuse, ce qui est particulièrement intéressant notamment dans le domaine de l'habitation et de l'aménagement des locaux destinés à recevoir du public. Dans ce cadre, le procédé de l'invention comprend en outre une étape d'application d'une composition aqueuse, de préférence de type peinture, vernis ou adhésif à base aqueuse sur la couche de matériau géopolymère obtenue sur le substrat à partir de la composition géopolymère. Selon un mode de réalisation intéressant, la composition aqueuse déposée sur le matériau géopolymère est choisie de façon à obtenir un revêtement isolant vis-à-vis de l'eau ou de l'humidité au-dessus de la composition géopolymère.

Différents aspects et modes de réalisation possibles de l'invention sont décrits plus en détails ci-après.

### Le matériau géopolymère et la composition géopolymère permettant de l'obtenir

Au sens de la présente description, le terme de « matériau géopolymère » désigne un matériau solide comprenant du silicium (Si), de l'aluminium (AI), de l'oxygène (O) et au moins un élément choisi parmi le potassium (K), le sodium (Na), le lithium (Li), le césium (Cs) et le calcium (Ca), et de préférence choisi parmi le potassium (K), et le sodium (Na).

Le matériau géopolymère peut notamment être un matériau géopolymère aluminosilicate. Le cas échéant, ce matériau géopolymère aluminosilicate peut être choisi parmi les poly(sialates) répondant à la formule (I) Mₙ(-Si-O-Al-O-)ₙ [(M)-PS] et ayant un rapport molaire Si/AI égal à 1, les poly(sialate-siloxos) répondant à la formule (II) Mₙ(-Si-O-AI-O-Si-O-)ₙ [(M)-PPS] et ayant un rapport molaire Si/AI égal à 2, les poly(sialate-disiloxos) répondant à la formule (III) Mₙ(-Si-O-Al-O-Si-O-Si-O)ₙ [(M)-PSDS] et ayant un rapport molaire Si/AI égal à 3, et d'autres poly(sialates) de rapport Si/AI > 3, les poly(sialates) précités comprenant un cation alcalin M choisi parmi K, Na, Li, Cs et l'un de leurs mélanges, et n désigne le degré de polymérisation.

Le matériau géopolymère est obtenu à partir d'une composition géopolymère, en général par séchage, géopolymérisation et/ou polycondensation de ladite composition géopolymère (processus désignés ici par « *durcissement »* de la composition géopolymère).

Une « composition géopolymère », au sens de la présente description, est une composition, généralement liquide, apte à former par durcissement un matériau géopolymère solide. Les ingrédients de la composition géopolymère peuvent donc subir une polycondensation pour former ledit matériau géopolymère.

La formation du matériau géopolymère à partir de la composition géopolymère s'effectue par une réaction interne et n'est généralement pas le résultat d'un simple séchage, comme c'est généralement le cas pour des liants à base de silicates alcalins. En effet, les matériaux géopolymères résultent d'une réaction de polycondensation minérale par activation alcaline, dite géosynthèse, par opposition aux liants traditionnels hydrauliques dans lesquels le durcissement est le résultat d'une hydratation des aluminates de calcium et des silicates de calcium.

La composition géopolymère employée dans le cadre de la présente invention est de préférence une composition géopolymère aluminosilicate.

La composition géopolymère de l'invention est de façon particulièrement préférée une composition géopolymère comprenant de l'eau, du silicium (Si), de l'aluminium (AI), de l'oxygène (O), et au moins un élément choisi parmi le potassium (K), le sodium (Na), le lithium (Li), le césium (Cs), et le calcium (Ca), et de préférence choisi parmi le potassium (K) et le sodium (Na).

La composition géopolymère peut en particulier comprendre au moins un aluminosilicate, au moins un silicate alcalin, de l'eau, et éventuellement une base alcaline.

### L'aluminosilicate

Le (ou les) aluminosilicate(s) présent(s) dans la composition géopolymère peut être choisi parmi les métakaolins (i.e. kaolins calcinés), les cendres volantes (bien connues sous l'anglicisme « *fly ash* »), le laitier de haut fourneau (bien connu sous l'anglicisme « *blast furnace slag* »), les argiles gonflantes telles que la bentonite, les argiles calcinées, tout type de composé comprenant de l'aluminium et de la fumée de silice, les zéolithes, et leurs mélanges.

Parmi ces composés, les métakaolins sont préférés, notamment ceux commercialisés par la société Imérys.

Dans l'invention, l'expression « métakaolin » signifie un kaolin calciné ou un aluminosilicate déshydroxylé. Il est de préférence obtenu par déshydratation d'un kaolin ou d'une kaolinite.

La composition géopolymère peut comprendre de 5 à 50% en poids environ d'aluminosilicate, et de préférence de 10 à 35% en poids environ d'aluminosilicate, par rapport au poids total de la composition géopolymère.

La teneur en aluminosilicate par rapport au poids de la matière sèche de la composition géopolymère est typiquement comprise entre 10 et 50%, par exemple entre 15 et 30 %

De préférence, la composition géopolymère employée selon la présente invention comprend un mélange de deux aluminosilicates distincts, à savoir au moins un premier aluminosilicate et au moins un deuxième aluminosilicate distinct du premier aluminosilicate.

De préférence, la composition géopolymère comprend deux kaolins calcinés distincts, ayant des températures de calcination différentes, de préférence un premier métakaolin choisi parmi les kaolins calcinés à une température T_{c1} d'au moins 650°C environ, et un deuxième métakaolin choisi parmi les kaolins calcinés à une température T_{c2} telle que T_{c2} - T_{c1} ≥ 100°C.

Selon une forme de réalisation particulièrement préférée de l'invention, la composition géopolymère comprend un premier métakaolin choisi parmi les kaolins calcinés à une température T_{c1} d'au moins 650°C environ, et un deuxième métakaolin choisi parmi les kaolins calcinés à une température T_{c2} telle que T_{c2} - T_{c1} ≥ 100°C, au moins un premier silicate alcalin, de l'eau, et éventuellement une base alcaline. La composition géopolymère peut alors présenter des propriétés mécaniques améliorées, notamment en termes de flexibilité et de durabilité, tout en garantissant de bonnes propriétés de réaction et de résistance au feu.

Selon une forme de réalisation de l'invention, le premier métakaolin est un kaolin calciné à une température T_{c1} d'au moins 700°C environ, et de préférence d'au moins 725°C environ.

Selon une forme de réalisation préférée de l'invention, le premier métakaolin est un kaolin calciné à une température T_{c1} d'au plus 875°C environ, et de préférence d'au plus 825°C environ.

Le premier métakaolin peut comprendre au moins 20% en mole environ, et de préférence au moins 30% en mole environ d'oxyde d'aluminium (Al₂O₃), par rapport au nombre de moles total du premier métakaolin.

Le premier métakaolin peut comprendre au plus 60% en mole environ, et de préférence au plus 50% en mole environ d'oxyde d'aluminium (Al₂O₃), par rapport au nombre de moles total du premier métakaolin.

Le premier métakaolin peut comprendre au moins 35% en mole environ, et de préférence au moins 45% en mole environ d'oxyde de silicium (SiO₂), par rapport au nombre de moles total du premier métakaolin.

Le premier métakaolin peut comprendre au plus 75% en mole environ, et de préférence au plus 65% en mole environ d'oxyde de silicium (SiO₂), par rapport au nombre de moles total du premier métakaolin.

À titre d'exemples de premier métakaolin, on peut citer les métakaolins vendus par la société Imérys, notamment celui commercialisé sous la référence PoleStar^{®} 450.

Le premier métakaolin peut être choisi parmi les kaolins calcinés à T_{c1} telle que définie ci-dessus, pendant au moins 1 min environ, de préférence pendant au moins 10 min environ, de façon particulièrement préférée pendant une durée allant d'environ 30 min à 8h, et de façon plus particulièrement préférée pendant une durée allant d'environ 2h à 6h.

Le deuxième métakaolin est choisi de préférence parmi les kaolins calcinés à une température T_{c2} telle que T_{c2} - T_{c1} ≥ 150°C environ, de façon particulièrement préférée telle que T_{c2} - T_{c1} ≥ 200°C environ, et de façon plus particulièrement préférée telle que T_{c2} - T_{c1} ≥ 250°C environ.

Selon une forme de réalisation de l'invention, le deuxième métakaolin est un kaolin calciné à une température T_{c2} d'au moins 800°C environ, de préférence d'au moins 850°C environ, et de façon particulièrement préférée d'au moins 900°C environ.

Selon une forme de réalisation préférée de l'invention, le deuxième métakaolin est un kaolin calciné à une température T_{c2} d'au plus 1200°C environ, et de préférence d'au plus 1150°C environ.

Le deuxième métakaolin peut comprendre au moins 20% en mole environ, et de préférence au moins 30% en mole environ d'oxyde d'aluminium (Al₂O₃), par rapport au nombre de moles total du deuxième métakaolin.

Le deuxième métakaolin peut comprendre au plus 60% en mole environ, et de préférence au plus 50% en mole environ d'oxyde d'aluminium (Al₂O₃), par rapport au nombre de moles total du deuxième métakaolin.

Le deuxième métakaolin peut comprendre au moins 35% en mole environ, et de préférence au moins 45% en mole environ d'oxyde de silicium (SiO₂), par rapport au nombre de moles total du deuxième métakaolin.

Le deuxième métakaolin peut comprendre au plus 75% en mole environ, et de préférence au plus 65% en mole environ d'oxyde de silicium (SiO₂), par rapport au nombre de moles total du deuxième métakaolin.

À titre d'exemples de deuxième métakaolin, on peut citer les métakaolins vendus par la société Imérys, notamment celui commercialisé sous la référence PoleStar^{®} 200R.

Le deuxième métakaolin peut être choisi parmi les kaolins calcinés à T_{c2} telle que définie dans l'invention, pendant au moins 1 min environ, de préférence pendant au moins 5 min environ, de façon particulièrement préférée pendant une durée allant d'environ 10 min à 2h, et de façon plus particulièrement préférée pendant une durée allant d'environ 15 min à 1h.

Le rapport massique [premier métakaolin/deuxième métakaolin] correspondant à la masse totale de premier métakaolin dans la composition géopolymère rapportée à la masse totale de deuxième métakaolin dans la composition géopolymère va de préférence de 0,1 :1 à 2 :1 environ, de façon particulièrement préférée de 0,5 :1 à 1,0 :1 environ, et de façon plus particulièrement préférée est d'environ 1:1.

La composition géopolymère peut comprendre de 5 à 50% en poids environ, et de préférence de 10 à 35% en poids environ de premier et deuxième métakaolins, par rapport au poids total de la composition géopolymère.

### Le silicate alcalin

Le (ou les) silicate(s) alcalin(s) présent(s) dans la composition géopolymère peuvent être choisi parmi les silicates de sodium, les silicates de potassium, et leurs mélanges.

Les silicates alcalins commercialisés par la société Silmaco ou par la société PQ corporation sont préférés.

Avantageusement, la composition géopolymère employée selon l'invention comprend au moins un silicate de sodium.

Un silicate alcalin utile selon l'invention peut avoir un rapport molaire SiO₂/M₂O allant de 1,1 à 35 environ, de préférence de 1,3 à 10 environ, et de façon particulièrement préférée de 1,4 à 5 environ, avec M étant un atome de sodium ou de potassium, et de préférence un atome de sodium.

La composition géopolymère peut comprendre de 5 à 80% en poids environ, et de préférence de 10 à 50% en poids environ de silicate alcalin, par rapport au poids total de la composition géopolymère.

Selon un mode de réalisation intéressant, la composition géopolymère utilisée selon l'invention comprend un silicate alcalin du type précité, de préférence un silicate de sodium, et deux aluminosilicates distincts qui sont de préférence deux métakaolins distincts du type précité, avec une teneur en silicate alcalin qui est de préférence entre 70% et 90 %, de préférence entre 75% et 85% (par exemple de l'ordre de 80%) par rapport à la masse totale de silicate et d'aluminosilicates. La teneur en aluminosilicates et quant à elle comprise entre 10% et 70 %, de préférence entre 15% et 25% (par exemple de l'ordre de 20%) par rapport à la masse totale de silicate et d'aluminosilicates

La composition géopolymère peut éventuellement comprendre plusieurs silicates alcalin, à savoir au moins un silicate alcalin du type précité et un deuxième silicate alcalin différent du premier.

Le deuxième silicate alcalin peut être choisi parmi les silicates de sodium, les silicates de potassium, et l'un de leurs mélanges. Les silicates alcalins commercialisés par la société Silmaco ou par la société PQ Corporation sont préférés. Le deuxième silicate alcalin est de préférence un silicate de sodium.

Les premier et deuxième silicates alcalins peuvent avoir respectivement des rapports molaires SiO₂/M₂O et SiO₂/M'₂O tels que M et M', identiques, sont choisis parmi un atome de sodium et un atome de potassium, et de préférence un atome de sodium, et lesdits rapports ont des valeurs différentes, de préférence des valeurs telles que leur différence est d'au moins 0,3, de façon particulièrement préférée telles que leur différence est d'au moins 0,5, et de façon plus particulièrement préférée telles que leur différence est d'au moins 1,0.

Selon une forme de réalisation possible de l'invention, la composition géopolymère comprend :
- un premier silicate alcalin ayant un rapport molaire SiO₂/M₂O allant de 1,5 à 2,6 environ, et
- un deuxième silicate alcalin ayant un rapport molaire SiO₂/M'₂O supérieur à 2,6, de préférence allant de 2,8 à 4,5 environ, et de façon particulièrement préférée allant de 3,0 à 4,0 environ, étant entendu que M' est identique à M.

La composition géopolymère peut comprendre de 10 à 60% en poids environ, et de préférence de 20 à 50% en poids environ de premier et deuxième silicates alcalins, par rapport au poids total de la composition géopolymère.

Le rapport massique [premier silicate alcalin/deuxième silicate alcalin] dans la composition géopolymère va de préférence de 0,5 à 2,5, et de façon particulièrement préférée de 0,8 à 2,0.

### La base alcaline

La base alcaline typiquement employée dans la composition géopolymère utile selon l'invention peut par exemple être de l'hydroxyde de sodium, ou de l'hydroxyde de potassium, et de préférence de l'hydroxyde de sodium.

La composition géopolymère peut être exempte de base alcaline. Cela permet ainsi d'améliorer la manipulation de la composition géopolymère, en particulier lors de l'application sur le substrat.

### La teneur en eau

Le rapport massique matières solides/eau dans ladite composition géopolymère détermine la cinétique de solidification (prise) de la composition, ainsi que la viscosité de la composition géopolymère lors de son application .

La composition géopolymère peut comprendre de 35% à 80% en poids environ, et de façon particulièrement préférée de 40% à 70% en poids environ, de matières solides (silicate alcalin(s), aluminosilicate(s) et base alcaline), par rapport au poids total de ladite composition géopolymère.

### Additifs optionnels

La composition géopolymère utile selon l'invention peut éventuellement comprendre un ou plusieurs additifs choisis parmi:
- au moins un colorant,
- des fibres minérales, notamment choisies parmi les fibres d'alumine,
- un additif à structure polymère, notamment choisi parmi les fibres de polyoléfine telles que les fibres de polypropylène, de polyéthylène haute densité (HDPE), les aramides, et les fibres techniques de verre enduites de silicone ou d'un polymère organique de type polyéthylène ; un copolymère de styrène-butadiène (SBR) ; un copolymère de styrène-butadiène-éthylène (EBS) ; les dérivés des copolymères de styrène-éthylène, notamment ceux commercialisés par Kraton tels qu'un copolymère de styrène-éthylène-butylène-styrène (SEBS), un copolymère de styrène-butadiène-styrène (SBS), un copolymère de styrène-isoprène-styrène (SIS), un copolymère de styrène-propylène-éthylène (EPS) ou un copolymère de styrène-éthylène-propylène- styrène (SEPS) ; un copolymère d'éthylène et d'acétate de vinyle (EVA), un polyorganosiloxane réticulé (e.g. à l'aide d'un peroxyde) ; du polyéthylène éventuellement sous forme de poudre ; des lignosulfonates ; de l'acétate de cellulose ; d'autres dérivés de la cellulose ; une huile silicone de faible viscosité (e.g. de l'ordre de 12500 cPo) ; et une huile polyéthylène,
- un composé accélérant la prise en masse, notamment choisi parmi le sulfate d'aluminium, les aluns (e.g. sulfate double d'aluminium et de potassium), le chlorure de calcium, le sulfate de calcium, le sulfate de calcium hydraté, l'aluminate de sodium, le carbonate de sodium, le chlorure de sodium, le silicate de sodium, le sulfate de sodium, le chlorure de fer (III), et les lignosulfonates de sodium,
- un agent retardant la prise en masse, notamment choisi parmi l'ammonium, les métaux alcalins, les métaux alcalino-terreux, le borax, les lignosulfonates et en particulier les sels de métaux de lignosulfonates de calcium, les celluloses telles que la carboxyméthyl hydroéthyl cellulose, les lignines sulfoalkylées telles que par exemple la lignine sulfométhylée, les acides hydroxycarboxyliques, les copolymères de sels d'acide 2-acrylamido-2-méthylpropane sulfonique et d'acide acrylique ou d'acide maléique, et les sels saturés,
- une charge inerte, notamment choisi parmi le talc, les micas, les argiles déshydratées, et le carbonate de calcium,
- un amidon,
- un plastifiant de l'amidon, notamment choisi parmi un stéarate de métal, un polyéthylène glycol, un éthylène glycol, un polyol comme le glycérol, le sorbitol, le mannitol, le maltitol, le xylitol ou un oligomère de l'un de ces polyols, un sucrose comme le glucose ou le fructose, un plastifiant contenant des groupes amides, et tout type de plastifiant à base de polysaccharide(s) modifié(s),
- un dérivé de la cellulose,
- un matériau carboné expansé tel qu'un graphite expansé.

Lorsqu'un colorant est présent, il s'agit de préférence d'un colorant liquide à température ambiante (i.e. à 18-25°C).

La composition géopolymère peut comprendre de 0,01 à 15% en poids environ d'additif(s), et de préférence de 0,5 à 8% en poids environ d'additif(s), par rapport au poids total de la composition géopolymère.

### Préparation de la composition géopolymère

Une composition géopolymère utile selon l'invention peut typiquement être préparée selon une étape (E) de mélange de l'aluminosilicate, ou du mélange d'aluminosilicates lorsque plusieurs aluminosilicates sont employés, avec le silicate alcalin, ou le mélange de silicates alcalins le cas échéant, l'eau, et éventuellement la base alcaline et/ou les additifs.

Cette étape de mélange est généralement effectuée à un pH élevé, notamment variant de 10 à 13.

Cette étape de mélange comprend de préférence les sous-étapes suivantes :
(E₁) préparation d'une solution aqueuse d'un premier silicate alcalin ; et
(E₂) mélange d'un premier aluminosilicate sous forme de poudre avec la solution aqueuse de silicate alcalin préparée à la sous-étape (E₁).

La solution aqueuse du premier silicate alcalin peut être préparée en mélangeant du dioxyde de silicium SiO₂ ou un silicate alcalin avec une base MOH dans laquelle M est K ou Na.

Le dioxyde de silicium SiO₂ peut être choisi parmi la fumée de silice (i.e. silice pyrogénée), le quartz, et leurs mélanges.

La sous-étape (E₁) peut être effectuée en dissolvant la base dans de l'eau, entraînant un dégagement de chaleur (réaction exothermique), puis en ajoutant la silice (ou le silicate alcalin). La chaleur dégagée accélère alors la dissolution de la silice (ou du silicate alcalin) lors de la sous-étape (E₁), et du premier aluminosilicate lors de la sous-étape (E₂).

Lorsqu'on emploie un deuxième aluminosilicate et/ou un deuxième silicate alcalin, l'étape (E) de préparation de la composition géopolymère peut comprendre le mélange dudit premier aluminosilicate et éventuellement dudit deuxième aluminosilicate, avec ledit premier silicate alcalin, éventuellement ledit deuxième silicate alcalin, de l'eau, et éventuellement la base alcaline.

L'étape (E) comprend de préférence le mélange des premier et deuxième métakaolins, avec le premier silicate alcalin et éventuellement le deuxième silicate alcalin, de l'eau, et éventuellement une base alcaline.

Selon une forme de réalisation préférée, l'étape (E) comprend les sous-étapes suivantes :
(Ea) mélange des premier et deuxième silicates alcalins, notamment sous agitation ;
(Eb) éventuel ajout d'une base alcaline, notamment en maintenant l'agitation ; et
(Ec) l'ajout des premier et deuxième métakaolins, notamment en maintenant l'agitation.

À l'issue de l'étape (E), notamment à l'issue de la sous-étape (E2) ou (E c) lorsqu'elles sont mises en oeuvre, on obtient préférentiellement une solution fluide et homogène.

À l'issue de l'étape (E), la composition géopolymère peut comprendre de 35% à 80% en poids environ, et de façon particulièrement préférée de 40% à 70% en poids environ, de matières solides (silicate alcalin(s), aluminosilicate(s) et base alcaline), par rapport au poids total de ladite composition géopolymère.

Un tel rapport massique permet d'avoir une composition géopolymère assez fluide pour permettre sa manipulation, et dont la cinétique de solidification est assez lente pour permettre une application sur le substrat.

Le rapport massique matières solides/eau dans ladite composition géopolymère peut permettre de déterminer la cinétique de solidification de ladite composition géopolymère.

Après l'étape (E) de préparation de la composition géopolymère, et avant son imprégnation sur le matériau fibreux, la composition géopolymère peut éventuellement être chauffée, notamment à une température allant de 55°C à 95°C environ, par exemple entre 70°C à 90°C environ. Ce chauffage peut faciliter l'étape d'imprégnation. Le cas échéant, il convient néanmoins de contrôler les conditions de chauffage, qui, si elles sont trop drastiques, peuvent induire des phénomènes de polymérisation et de prise en masse.

Application de la composition géopolymère sur le substrat à base de fibres de bois

Dans le procédé d'ignifugation de la présente invention, la composition géopolymère, de par sa nature liquide et aqueuse, se prête à une application sur le substrat selon les techniques usuellement employées pour appliquer une peinture aqueuse. Ainsi, à titre non limitatif, l'application de la composition géopolymère sur le substrat à base de fibres de bois peut par exemple être effectuée :
- au rouleau ;
- au pinceau ;
- à l'aide d'un tampon
- par pulvérisation (« spray »), notamment à l'aide d'un dispositif de type pistolet à peinture ;
- par immersion du substrat dans la composition géopolymère.

Selon un mode de réalisation intéressant qui est illustré dans l'exemple donné à la fin de la présente description, la composition géopolymère est appliquée au rouleau sur le substrat.

La viscosité de la composition peut être ajustée en fonction du mode d'application choisi, notamment en modulant la quantité d'eau présente dans la composition, avec des viscosités de préférence assez faibles pour des méthodes par pulvérisation ou immersion, et plus élevées pour les applications au pinceau ou au rouleau.

L'obtention du matériau géopolymère à partir de la composition géopolymère s'obtient typiquement par simple séchage à l'air libre, sans appliquer de traitement thermique (en général à l'air libre et à température ambiante d'une durée de l'ordre de 24 heures permet d'obtenir le matériau géopolymère).

Dans les modes précités, l'application de la composition géopolymère intervient après la fabrication du substrat. Selon un mode de réalisation plus particulier, concernant les substrats constituées de particules base de fibres de bois et/ou de fibres de bois réagglomérées, l'application de la composition géopolymère peut toutefois avoir lieu pendant la préparation du substrat : dans ce cadre, le géopolymère de l'invention peut être employé à titre de tout ou partie du liant servant à solidariser entre elles les particules base de fibres de bois et/ou de fibres de bois, ce par quoi une partie du géopolymère se retrouve appliquée en surface. Cependant, à la différence des méthodes précitées où l'application a lieu sur un substrat préformé, la pénétration du géopolymère dans la structure du substrat est totale dans ce mode plus particulier, ce qui augmente les effets précités en particulier en ce qui concerne le renfort mécanique du matériau : le renfort assuré, dans la masse, par le géopolymère s'oppose encore plus nettement à un écroulement de la structure du substrat notamment dans les conditions d'un incendie. Dans le mode de réalisation où le géopolymère est employé comme liant, le substrat est typiquement obtenu à partir d'un mélange comprenant la composition géopolymère et les fibres ou particules dispersées dans ladite composition, cette composition conduisant au substrat recherché suite à la transformation progressive de la composition géopolymère en le matériau géopolymère (prise). Typiquement, cette prise du mélange s'opère dans un moule, éventuellement sous pression, le moulage permettant d'obtenir un substrat de forme prédéterminée.

L'Exemple ci-après illustre l'invention.

### EXEMPLE

Une composition géopolymère a été préparée à partir d'un mélange solide contenant en masse :
78% de silicate de sodium
11% d'un métakaolin PoleStar^{®} 450
11% d'un métakaolin PoleStar^{®} 200R.

La composition obtenue a été appliquée au rouleau sur la totalité des deux surfaces d'un panneau de MDF (type EN13986 - 2015) de dimensions 30 cm x 150 cm et d'épaisseur égale à 10 mm et, puis séché à l'ai libre durant 24 heures à température ambiante.

Des essais selon la norme EN50399 (2022) ont été réalisés sur le panneau revêtu ainsi obtenu. A des fins de comparaisons, les mêmes tests ont été réalisé sur un panneau témoin identique (panneau du même MDF et de mêmes dimensions) mais non revêtu par la composition géopolymère. Les résultats obtenus sont reportés ci-dessous :
Pic de chaleur (PHRR) :
   9,0 kW contre 245,7 kW pour le témoin (diminution d'un facteur 25)
Chaleur totale dégagée (THR) :
   7,1 MJ contre 81,1 MJ pour le témoin (diminution d'un facteur 11)
Vitesse de croissance de l'incendie (FIGRA) :
   24,0 W/s contre 271,5 W/s pour le témoin (diminution d'un facteur 10)
Propagation de flamme (FS) :
   0,7 m contre 3,0 m pour le témoin (propagation totale - tout l'échantillon est détruit)
Pic de développement des fumées (pic SPR) :
   0,0 m²/s contre 0,2 m²/s pour le témoin
Production totale de fumées (TSP)
   11,5 m² contre 55 m² pour le témoin (réduction d'un facteur 5)

## Revendications

1. Procédé d'ignifugation d'un substrat à base de fibres de bois comprenant l'application sur ledit substrat d'une composition géopolymère où la composition géopolymère comprend au moins un premier aluminosilicate et au moins un deuxième aluminosilicate distinct du premier aluminosilicate, au moins un aluminosilicate, au moins un silicate alcalin, de l'eau, et éventuellement une base alcaline, et où
le premier aluminosilicate est un premier métakaolin choisi parmi les kaolins calcinés à une température T_{c1} d'au moins 650°C environ, et
le deuxième aluminosilicate est un deuxième métakaolin choisi parmi les kaolins calcinés à une température T_{c2} telle que T_{c2} - T_{c1} ≥ 100°C.

2. Procédé d'ignifugation selon la revendication 1 où le silicate alcalin est un silicate de sodium.

3. Procédé d'ignifugation selon la revendication 1 ou 2 où l'application de la composition géopolymère sur le substrat à base de fibres de bois effectuée au rouleau ; au pinceau ; à l'aide d'un tampon ; par pulvérisation ; ou par immersion du substrat dans la composition géopolymère.

4. Procédé d'ignifugation selon l'une des revendications 1 à 3 où le substrat comprend des particules à base de fibres de bois réagglomérées entre elles ou des fibres de bois réagglomérées entre elles, et où l'application de la composition géopolymère a lieu pendant la préparation du substrat, ledit substrat est obtenu à partir d'un mélange comprenant la composition géopolymère et les fibres ou particules dispersées dans ladite composition.

5. Procédé d'ignifugation selon l'une des revendications 1 à 4, qui comprend, suite à l'application de la composition géopolymère, une étape de conversion de la composition géopolymère en un matériau géopolymère, notamment par séchage.

6. Procédé d'ignifugation selon la revendication 5, qui comprend en outre une étape d'application d'une composition aqueuse, de préférence de type peinture, vernis ou adhésif à base aqueuse sur la couche de matériau géopolymère obtenue sur le substrat à partir de la composition géopolymère.

7. Elément ignifugé comprenant au moins un substrat à base de fibres de bois, et au moins un revêtement à base d'un matériau géopolymère sur ledit substrat où ledit matériau géopolymère est obtenu à partir d'une composition géopolymère qui comprend au moins un premier aluminosilicate et au moins un deuxième aluminosilicate distinct du premier aluminosilicate, au moins un aluminosilicate, au moins un silicate alcalin, de l'eau, et éventuellement une base alcaline, et où
le premier aluminosilicate est un premier métakaolin choisi parmi les kaolins calcinés à une température T_{c1} d'au moins 650°C environ, et
le deuxième aluminosilicate est un deuxième métakaolin choisi parmi les kaolins calcinés à une température T_{c2} telle que T_{c2} - T_{c1} ≥ 100°C..

8. Utilisation d'un élément ignifugé selon la revendication 10, à titre d'éléments architecturaux, structuraux ou décoratifs, notamment à l'intérieur des logements d'habitation ou à l'intérieur d'immeubles destinés à recevoir du public.

9. Utilisation d'un élément ignifugé selon la revendication 10, à titre de chemin de câble destiné à contenir des câbles électriques pour le transport d'énergie ou d'information.
